# EUROPÄISCHE PATENTSCHRIFT

(11) **EP 0 478 651 B1**
(45) Veröffentlichungstag und Bekanntmachung des Hinweises auf die Patenterteilung: **24.03.1993**
(21) Anmeldenummer: 90909724.8
(22) Anmeldetag: 15.06.1990
(51) Int. Cl.: G02C 5/14

(54) **BRILLENFASSUNG**
SPECTACLE FRAME
MONTURE DE LUNETTES

(30) Priorität: 23.06.1989 DE 8907684 U
(43) Veröffentlichungstag der Anmeldung: 08.04.1992
(73) Patentinhaber: STEINWACHS, Peter, D-64521 Gross-Gerau (DE)
(72) Erfinder: STEINWACHS, Peter, D-64521 Gross-Gerau (DE)
(74) Vertreter: Katscher, Helmut, Dipl.-Ing.
(86) Internationale Anmeldenummer: EP9000950
(87) Internationale Veröffentlichungsnummer: WO9100539

(56) Entgegenhaltungen:
- WO-A-89/05469
- DE-U- 8 805 603
- DE-U- 8 907 684
- FR-A- 2 588 389

## Beschreibung

Die Erfindung betrifft eine Brillenfassung mit zwei jeweils über ein Scharnier an einem Mittelteil angelenkten Brillenbügeln die einen Bügelsteg aufweisen.

Brillenfassungen werden überwiegend aus Kunststoff und/oder Metall hergestellt. Die Brillenbügel können beispielsweise vollständig aus Kunststoff bestehen, wobei das Scharnier wegen der hohen mechanischen Beanspruchung in den meisten Fällen aus Metall besteht.

In vielen Fällen weisen die aus Kunststoff gefertigten Brillenbügel eine ganz oder teilweise durchgehende Metalleinlage auf, die der Verstärkung dient. Die Brillenbügel können auch ganz oder mindestens in ihrem vorderen Teil aus Metall bestehen.

Aus ästhetischen Gründen, aber auch wegen des senkrechten Verlaufs der Scharnierachse ist es erwünscht und üblich, daß der Bügelsteg an seinem scharnierseitigen Ende einen hochkantstehenden verbreiterten Bügelabschnitt aufweist. Beim Aufsetzen und Absetzen wird die Brille üblicherweise an diesem vorderen Bügelabschnitt angefaßt, und zwar mit Daumen und Zeigefinger, wobei die Greifflächen der Finger angenähert horizontal liegen. Dies bedingt, daß durch den Griff der Finger nur ein verhältnismäßig geringes Moment um die Längsachse des ergriffenen Bügelstegs ausgeübt werden kann. Ein solches Moment ist aber erforderlich, um die üblicherweise nur einseitig ergriffene Brille horizontal zu halten. Um die den Bügelsteg ergreifenden Finger bezüglich dieses Momentes zu entlasten, stützt man üblicherweise weitere Finger am Mittelteil der Brillenfassung ab, um diese zwanglos horizontal halten zu können.

Diese übliche Greifhaltung hat aber die Nachteile, daß die das Mittelteil stützenden Finger leicht auf die Brillengläser gelangen können, so daß diese durch Feuchtigkeit oder Fett verunreinigt werden. Außerdem bedingt die beschriebene übliche Griffhaltung, daß mit der Hand gleichzeitig Kräfte auf das Mittelteil der Brillenfassung und auf den Bügelsteg ausgeübt werden. Bei unachtsamer, kräftiger Handhabung kann dies zu einer Beschädigung der Brillenfassung führen, insbesondere bei sehr leicht und dünn ausgeführten Brillenfassungen. Eine vorsichtige Handhabung derartiger empfindlicher Brillenfassungen, bei denen der Bügelsteg nur mit Daumen und Zeigefinger ergriffen wird, macht es aus den genannten Gründen erforderlich, die Bügelstege beider Brillenbügel gleichzeitig mit beiden Händen zu ergreifen, was nicht möglich ist, wenn man nur eine Hand frei hat.

Aufgabe der Erfindung ist es daher, eine Brillenfassung der eingangs genannten Gattung so auszubilden, daß sie allein mit Daumen und Zeigefinder einer Hand ergriffen und gehalten werden kann.

Diese Aufgabe wird erfindungsgemäß dadurch gelöst, daß jeder der Bügelstege nahe an seinem scharnierseitigen Ende eine im Gebrauch im wesentlichen horizontale Griffanflachung aufweist.

Diese Griffanflachung ist in ihrer Lage der angenähert horizontalen Ausrichtung des Greifspaltes zwischen Daumen und Zeigefinder der die Brillenfassung haltenden Hand angepaßt. Dadurch kann ohne Aufwendung allzu hoher Greifkräfte ein um die Bügellängsachse wirkendes Moment aufgenommen werden, das bei einseitigem Eingreifen durch das Gewicht der Brillenfassung erzeugt wird. Auf diese Weise können auch sehr empfindliche Brillenfassungen mit nur einer Hand schonend ergriffen werden, weil keine oder keine wesentliche Abstützung an anderen Teilen der Brillenfassung, insbesondere am Mittelteil erfolgt. Damit ist auch die Gefahr beseitigt, daß beim Ergreifen der Brillenfassung unbeabsichtigt so hohe Kräfte auf die Brillenfassung ausgeübt werden, daß diese unzulässig verformt wird.

Zweckmäßigerweise wird die Griffanflachung durch einen länglichen, flachen, im Gebrauch im wesentlichen horizontalen Bügelgriffabschnitt gebildet, der vorzugsweise im Bereich eines vorderen, hochkantstehenden verbreiterten Bügelabschnitts angeordnet ist.

Weitere vorteilhafte Ausgestaltungen des Erfindungsgedankens sind Gegenstand weiterer abhängiger Ansprüche.

Nachfolgend wird ein Ausführungsbeispiel der Erfindung näher erläutert, das in der Zeichnung dargestellt ist. Es zeigt:
Fig. 1 in räumlicher Darstellungsweise eine Brille mit einer Brillenfassung und
Fig. 2 eine vergrößerte Teilansicht in Richtung des Pfeiles II in Fig. 1.

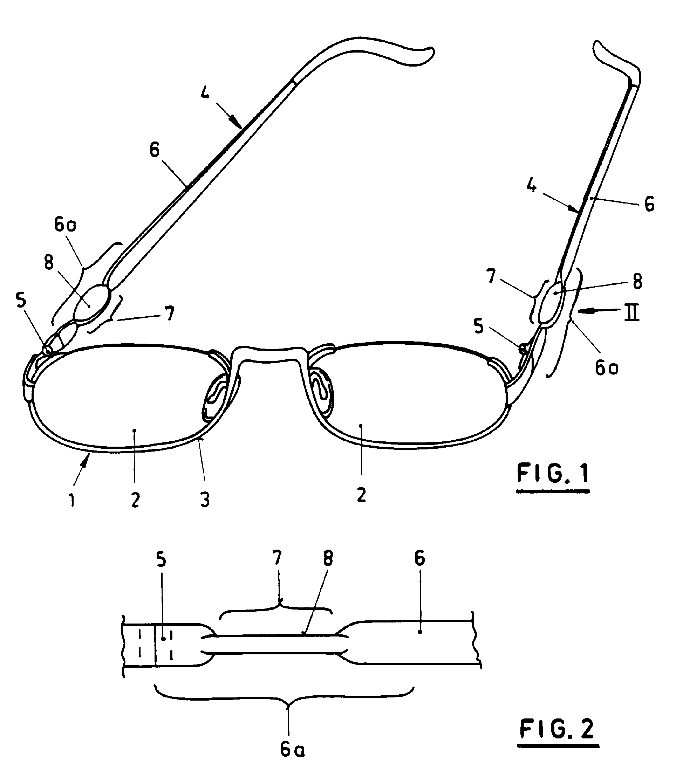

Die in Fig. 1 gezeigte Brille weist eine Brillenfassung 1 auf, in die zwei Brillengläser 2 eingesetzt sind. An einem Mittelteil 3 der Brillenfassung 1 ist auf beiden Seiten jeweils ein sich nach hinten erstreckender Brillenbügel 4 angelenkt, der um die im wesentlichen senkrechte Achse eines Scharniers 5 geklappt werden kann.

Jeder der beiden Brillenbügel 4 weist einen sich vom Scharnier 5 nach hinten erstreckenden länglichen Bügelsteg 6 auf, der bei dem dargestellten Ausführungsbeispiel als flacher, hochkantstehender länglicher Streifen ausgeführt ist und - ebenso wie das Mittelteil 3 - beispielsweise aus Metall besteht. Stattdessen ist aber auch eine Kunststoffausführung oder eine Verbundausführung aus Kunststoff und Metall möglich.

Nahe am scharnierseitigen Ende jedes Brillenbügels 6 besteht ein vorderer, hochkantstehender, verbreiterter Bügelabschnitt 6a. Im Bereich dieses Bügelabschnitts 6a ist ein länglicher, flacher, im wesentlichen horizontaler Bügelgriffabschnitt 7 geformt, dessen Oberseite und Unterseite eine im wesentlichen horizontale Griffanflachung 8 bilden. An dieser Griffanflachung 8 ergreift man den Brillenbügel 6 mit Daumen und Zeigefinger einer Hand. Die Länge der Griffanflachung 8 wird deshalb vorzugsweise in Fingerbreite gewählt.

Die Breite der Griffanflachung 8 bzw. des horizontalen Bügelabschnitts 7 (quer zur Bügellängsrichtung gemessen) kann wie beim dargestellten Ausführungsbeispiel angenähert gleich der Höhe des hochkantstehenden Bügelabschnitts 6a oder größer gewählt werden.

## Patentansprüche

1. Brillenfassung mit zwei jeweils über ein Scharnier (5) an einem Mittelteil (3) angelenkten Brillenbügeln(4), die einen Bügelsteg (6) aufweisen, dadurch gekennzeichnet, daß jeder der Bügelstege (6) nahe an seinem scharnierseitigen Ende eine im Gebrauch im wesentlichen horizontale Griffanflachung (8) aufweist.

2. Brillenfassung nach Anspruch 1, dadurch gekennzeichnet, daß die Griffanflachung (8) durch einen länglichen, flachen, im Gebrauch im wesentlichen horizontalen Bügelgriffabschnitt (7) gebildet wird.

3. Brillenfassung nach Anspruch 2, dadurch gekennzeichnet, daß der Bügelgriffabschnitt (7) im Bereich eines vorderen, hochkantstehenden verbreiterten Bügelabschnitts (6a) angeordnet ist.

4. Brillenfassung nach Anspruch 3, dadurch gekennzeichnet, daß die Breite des Bügelgriffabschnitts (7) angenähert gleich der höhe des hochkantstehenden Bügelabschnitts (6a) ist.

5. Brillenfassung nach Anspruch 3, dadurch gekennzeichnet, daß die Breite des Bügelgriffabschnitts (7) größer als die HÖhe der hochkantstehenden Bügelabschnitts (6a) ist.

## Claims

1. Spectacle frame with two ear-pieces (4) articulated by means of a hinge (5) onto a center part (3), said ear-pieces comprising a longitudinal section (6), characterized in that each of the longitudinal sections (6) is provided near its end on the side of the hinge with a in use essentially horizontal flat gripping segment (8).

2. Spectacle frame according to Claim 1, characterized in that the flat gripping segment (8) is formed by an elongated, flat, in use essentially horizontal gripping section (7) of the ear-piece.

3. Spectacle frame according to Claim 2, characterized in that the gripping section (7) of the ear-piece is located in the area of forward edge-wise broadened section (6a) of the ear-piece.

4. Spectacle frame according to Claim 3, characterized in that the width of the ear-piece gripping section (7) is approximately equal to the height of the edge-wise section (6a) of the ear-piece.

5. Spectacle frame according to Claim 3, characterized in that the width of the ear-piece gripping section (7) is larger than the height of the edge-wise section (6a) of the ear-piece.

## Revendications

1. Monture de lunettes comportant deux branches (4) respectivement articulées sur une partie centrale (3) autour d'une charnière (5), ces branches présentant chacune une partie en forme de barrette (6), caractérisée en ce que chacune des barrettes (6) présente, à proximité de son extrémité côté charnière, une surface de préhension (8) sensiblement horizontale en cours d'usage.

2. Monture de lunettes selon la revendication 1, caractérisée en ce que la surface de préhension (8) est formée par une section de préhension de branche (7) longitudinale, plate, sensiblement horizontale à l'usage.

3. Monture de lunettes selon la revendication 2, caractérisée en ce que la section de préhension de branche (7) est agencée dans la zone d'une section de branche (6a) frontale élargie placée de chant.

4. Monture de lunettes selon la revendication 3, caractérisée en ce que la largeur de la section de préhension de branche (7) est approximativement égale à la hauteur de la section de branche (6a) placée de chant.

5. Monture de lunettes selon la revendication 3, caractérisée en ce que la largeur de la section de préhension de branche (7) est supérieure à la hauteur de la section de branche (6a) placée de chant.
